# EUROPÄISCHE PATENTANMELDUNG

(11) **EP 1 020 325 A2**
(43) Veröffentlichungstag der Anmeldung: **19.07.2000**
(21) Anmeldenummer: 99116373.4
(22) Anmeldetag: 20.08.1999
(51) Int. Cl.: B60Q 1/26, A42B 3/04

(54) **Leuchten zur nach aussen sichtbaren Anzeige von Fahrsituationen im Strassenverkehr**

(30) Priorität: 16.01.1999 DE 29900708 U; 20.01.1999 DE 29900911 U
(71) Anmelder: Bousahba, Michael, 22303 Hamburg (DE)
(72) Erfinder: Bousahba, Michael, 22303 Hamburg (DE)
(74) Vertreter: Schupfner, Gerhard D., Dr. Dipl.-Chem.

(57) **Zusammenfassung**

Die Erfindung bezieht sich auf Leuchten zur nach außen sichtbaren Anzeige von Fahrsituationen im Straßenverkehr, an dem Verkehrsteilnehmer als Fahrer auf einem Fahrzeug frei sitzend teilnehmen und dabei einen Schutzhelm (1) tragen, wobei mittels am Fahrzeug frei sichtbar angebrachter Leuchten Funktions- und Signalanzeigen, wie das Beleuchten, das Bremsen, das Blinken zum Fahrtrichtungswechsel sowie gegebenenfalls die Positionserkennung, im Umfeld des Fahrzeuges erkennbar gemacht werden. Der Schutzhelm (1) ist dabei Träger von Leuchten (3,15,16,17), die mehrere der genannten Funktions- und Signalanzeigen des Fahrzeuges zusätzlich am Schutzhelm (1) und damit an deutlich erhöhter Stelle einzeln und/oder kombiniert zur Anzeige bringen, wobei die zusätzlichen Leuchten (3,15,16,17) speziell für die Anbringung an dem Schutzhelm (1) ausgebildet und an diesem anbringbar oder angebracht sind. Diese Leuchten (3,15,16,17) sind dazu vorgesehen, serienmäßig an zum Verkauf kommenden Schutzhelmen (1) angebracht zu sein oder als Nachrüstteile für Schutzhelme (1) im Handel angeboten zu werden.

## Beschreibung

Die Erfindung bezieht sich auf Leuchten zur nach außen sichtbaren Anzeige von Fahrsituationen im Straßenverkehr, an dem Verkehrsteilnehmer als Fahrer auf einem Fahrzeug frei sitzend teilnehmen und dabei einen Schutzhelm tragen, wobei mittels am Fahrzeug frei sichtbar angebrachter Leuchten Funktions- und Signalanzeigen, wie das Beleuchten, das Bremsen, das Blinken zum Fahrtrichtungswechsel sowie gegebenenfalls die Positionserkennung, im Umfeld des Fahrzeuges erkennbar gemacht werden.

Es ist Vorschrift und damit allgemein bekannt, an der Rückseite von Fahrzeugen Rückleuchten vorzusehen, die das Fahrzeug, wenn es mit Standlicht oder Hauptlicht fährt, von hinten her kenntlich machen. Motorradfahrer fahren auch am Tag mit Licht. Die Rücklichter sind sehr tief liegend angeordnet.

Zur Anzeige eines Fahrtrichtungswechsels ist der Führer eines als Kraftfahrzeug bezeichneten Drei-, Vier- oder Mehrradfahrzeuges im Straßenverkehr gehalten, an den Seiten seines Fahrzeuges Blinkleuchten einzuschalten, die dem übrigen beteiligten Verkehr kenntlich machen, daß das Fahrzeug seine Fahrtrichtung wechseln will. Bei Motorrädern, Motorrollern und auch von Motoren betriebenen Krankenfahrstühlen werden solche Blinkleuchten aus Sicherheitsgründen ebenfalls eingesetzt. Da Motorräder, Motorroller, die sich auf den Fahrzeugverkehrsflächen der Straßen zwischen den PKWs und LKWs bewegen, niedriger gebaut sind als PKWs und LKWs, werden Motorradfahrer und Rollerfahrer leicht übersehen.

Es ist aus der DE 298 04 764 U1 bekannt, zur Erhöhung der Verkehrssicherheit an der Rückseite des Schutzhelmes eines Motorradfahrers eine Bremsleuchte vorzusehen, die von dem nachfolgenden Verkehr besser gesehen wird als die Bremsleuchte in der Höhe des hinteren Kotflügels.

Es ist Aufgabe der Erfindung, die Verkehrssicherheit insbesondere von Motorrad- und Rollerfahrern, jedoch auch die von allen anderen am Straßenverkehr teilnehmenden Fahrzeugen, bei denen der Fahrer auf dem Fahrzeug im Freien sitzt und einen Schutzhelm trägt, weiter zu erhöhen.

Die gestellte Aufgabe ist erfindungsgemäß dadurch gelöst, daß der Schutzhelm Träger von Leuchten ist, die mehrere der genannten Funktions- und Signalanzeigen des Fahrzeuges zusätzlich am Schutzhelm und damit an deutlich erhöhter Stelle einzeln und/oder kombiniert zur Anzeige bringen, wobei die zusätzlichen Leuchten speziell für die Anbringung an dem Schutzhelm ausgebildet und an diesem anbringbar oder angebracht sind.

Der Schutzhelm ist damit ein Träger der verschiedensten zusätzlichen Leuchten geworden, zu denen Blinkleuchten, Rück-oder Schlußleuchten, kombinierte Schluß- und Bremsleuchten, sowie auch seitliche Erkennungsleuchten (gegebenenfalls kombiniert mit Blinkleuchten) und vordere Erkennungsleuchten gehören können. Die Leuchten sind zur Anbringung am Schutzhelm vorgesehen oder an ihm angebracht. Diese Leuchten können sowohl zusammen mit einem Schutzhelm als auch als Nachrüstteile im Handel geführt werden.

Als Fahrzeuge kommen beispielsweise Motorräder, Motorroller, Zweiräder, Drei- oder Mehrfachräder oder fahrbare Kranken- und Behindertenstühle in Betracht. Diese Fahrzeuggattung läßt sich charakterisieren oder zusammenfassen unter Fahrzeugen, bei denen der Fahrer im Straßenverkehr auf seinem Sitz im Freien sitzt und einen Schutzhelm trägt. Dies sind die Fahrzeuge, die niedriger sind als KFZs und die im Straßenverkehr leicht übersehen werden.

Trägt ein Fahrer dieser Fahrzeuggattung beim Fahren im Straßenverkehr an seinem Schutzhelm Blinkleuchten, dann werden seine Absichten, die Fahrtrichtung zu ändern, durch die blinkenden Blinkleuchten am Schutzhelm vom fließenden Verkehr wesentlich besser wahrgenommen als das beispielsweise von einem Radfahrer abgegebene Handzeichen, weil die den Fahrtrichtungswechsel anzeigenden Blinkleuchten wesentlich höher angebracht und damit besser sichtbar sind, als das Handzeichen. Dies gilt in gleicher Weise für die Rück-oder Schlußleuchte, für kombinierte Rück- und Bremsleuchten sowie für seitliche und vordere Erkennungsleuchten. Der Bremsvorgang wird bei der kombinierten Rück- und Bremsleuchte durch eine Verstärkung der Leuchtleistung des Lichtes der roten Rückleuchte erkennbar gemacht.

Nach einer weiteren Ausgestaltung der Erfindung ist vorgesehen, daß die Bodenflächen der auf den Schutzhelm aufsetzbaren Unterteile der Leuchten an die Formgebung des Schutzhelmes angepaßt sind. Damit wird ein satter Sitz der leuchten auf dem Schutzhelm erreicht.

Nach einer weiteren Ausgestaltung der Erfindung ist vorgesehen, daß die Leuchten mittels Klebstoffes an ihren Bodenflächen an dem Schutzhelm anbringbar oder angebracht sind Diese Art der Befestigung ist sicher und ermöglicht es, die Leuchten als Nachrüstsatz im Handel bereit zu halten oder dem Helmhersteller zur Verfügung zu stellen.

Nach einer weiteren Ausgestaltung der Erfindung ist dabei vorgesehen, daß der Klebstoff im unmontierten Zustand der Leuchten mittels einer Schutzfolie inaktiviert ist.

Nach einer weiteren Ausgestaltung der Erfindung ist vorgesehen, daß die Leuchten an einem Träger befestigt sind, der sich von dem einen Helmseitenbereich über die Helmrückseite zum anderen Helmseitenbereich erstrecken kann, wobei das Band an den Helm ankleb-,ansteck- oder anheftbar ist. Der Vorteil dieses Aufbaues besteht darin, daß die Leuchten über den Träger elektrisch miteinander verbunden sein können. Damit bietet sich die Möglichkeit, an dem Träger die Blinkleuchten, die Rückleuchte bzw. eine kombinierte Rück- und Bremsleuchte, die seitlichen Erkennungsleuchten und vordere Erkennungsleuchten zu befestigen.

Bei abgewandelten weiteren Ausgestaltungen der Erfindung ist vorgesehen, daß die Leuchten an den Schutzhelm ansteckbar oder anheftbar sind. Hierunter sind Ösensteckverbindungen oder Klettverschlüsse zu verstehen. Das vereinfacht den Austausch.

Nach einer weiteren Ausgestaltung der Erfindung ist vorgesehen, daß die Leuchten mit Batterien versehen sind.

Bei einer Variante dieser Ausgestaltung der Erfindung ist vorgesehen, daß die Leuchten mittels einer Kabelverbindung mit einer Batterie oder einem Stromerzeuger des Fahrzeuges verbindbar sind. In der Kabelverbindung kann zwischen dem Helm und der Batterie oder dem Stromerzeuger des Fahrzeuges vorzugsweise am Helm ein elektrisches Kupplungsstück vorgesehen sein.

Nach einer weiteren Ausgestaltung der Erfindung ist vorgesehen, daß die Leuchten einzeln oder gemeinsam mit einem Empfänger ausgerüstet sind, mit dem der Lichtvorgang ein- und ausschaltbar ist, und daß am Fahrzeug entsprechende Sender vorgesehen sind.

Nach einer weiteren Ausgestaltung der Erfindung ist vorgesehen, daß die Leuchten gemeinsam mit den entsprechenden Leuchten am Fahrzeug ein- und ausschaltbar sind.

Als Leuchten im vorbeschriebenen Sinn sind alle Leuchten zu verstehen, mit denen an einem Schutzhelm Lichtanzeigen des Fahrzeuges zusätzlich anzeigbar sind.

Die Erfindung wird anhand der Zeichnung näher erläutert, wobei vorwiegend auf das Beispiel der Blinkleuchten abgestellt ist. Konstruktionsmäßig gilt alles sowohl für Blinkleuchten, seitliche und vordere Begrenzungsleuchten als auch Schluß-oder Rückleuchten in Kombination mit Bremsleuchten. Unter Schluß-oder Rückleuchten ist ein und derselbe Funktionsgegenstand zu verstehen. Kombinationsleuchten für Rücklicht und Bremslicht sind Leuchten, die mit abgestufter Helligkeit für Rücklicht und Bremslicht arbeiten. Es zeigen:
Fig. 1 einen Schutzhelm eines Motorradfahrers, der mit verschiedenen Leuchten ausgestattet ist, von der Schutzhelmrückseite aus gesehen,
Fig. 2 eine einzelne Blinkleuchte, die zum Ankleben an einem Schutzhelm ausgebildet ist und dazu eine Klebstoffschicht aufweist, die mit einer teilweise abgelösten, die Klebstoffschicht abdeckenden Schutzfolie bedeckt ist,
Fig. 3 eine Blinkleuchte, die in eine Steckaufnahme an einem Schutzhelm lösbar einsteckbar ist,
Fig. 4 eine Blinkleuchte, die mittels einer Klettverbindung an einen Schutzhelm anheftbar ist,
Fig. 5 eine Seitenansicht des Schutzhelms mit verschiedenen Leuchten,
Fig. 6 einen bandförmigen Träger, der mit Leuchten nach den Figuren 1 bis 4 versehen ist, von der Helmrückseite her gesehen,
Fig. 7 die Anordnung nach Fig.6 von einem Helmseitenbereich her gesehen.

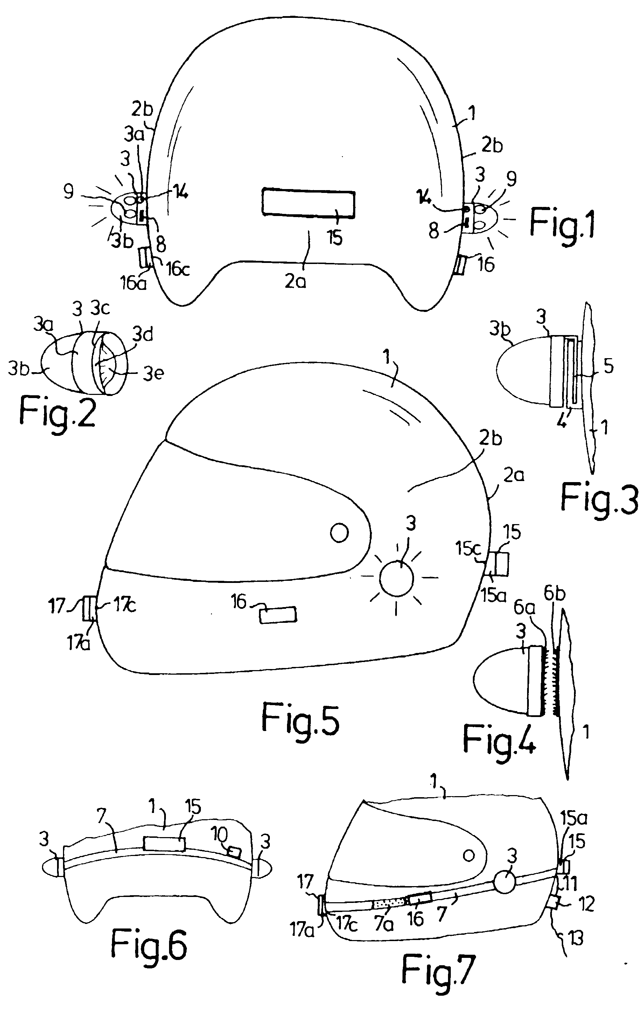

In Fig. 1 und Fig. 5 ist als Ausführungsbeispiel ein Schutzhelm 1 in seiner Rückansicht 2a dargestellt. In bezug auf die nun beschriebene technische Ausgestaltung des Schutzhelmes 1 ist diese ebenso einsetzbar bei jedwedem Schutzhelm 1, den der Fahrer eines Fahrzeuges trägt, das am Straßenverkehr teilnimmt, wobei der Fahrer während des Fahrens im Freien auf einem Sitz sitzt. Es kann sich also auch um ein Fahrrad, ein Drei- oder Mehrrad, einen selbst fahrenden Krankenstuhl oder dergleichen mehr handeln.

An den Seitenbereichen 2b sind in angemessener Größe Blinkleuchten 3 und gegebenenfalls seitliche Erkennungsleuchten 16 angeordnet. Diese Leuchten 3, 16 bestehen aus Unterteilen 3a,16a. Die Blinkleuchten 3 haben eine orange eingefärbte, lichtdurchlässige Kuppel 3b, die vorzugsweise aus Kunststoff besteht. Die Erkennungsleuchten 16 können vorn weiß und hinten rot gefärbt sein.

Es ist vorgesehen, diese Leuchten 3,16 beispielsweise auf die Seitenbereiche 2a des Schutzhelmes 1 aufzukleben. Wie Fig. 2 anhand des Beispieles einer Blinkleuchte 3 zeigt, sind dazu die Bodenflächen 3c der Blinkleuchten 3 mit einem Haftkleber 3d versehen. Dieser Haftkleber ist im Auslieferungszustand mittels einer Schutzfolie 3e abgedeckt. Diese Ausbildung kann bei allen an Schutzhelmen angebrachten Leuchten zum Einsatz kommen. Die Leuchten 3 und 16, sowie noch zu beschreibende Rückleuchten bzw. kombinierte Rück- und Bremsleuchten 15, sowie vordere Erkennungsleuchten 17, können serienmäßig mit den Schutzhelmen ausgeliefert werden. Ebenso gut können sie im Handel in einem Nachrüstsatz zum Verkauf angeboten werden.

Fig. 3 zeigt eine andere Befestigungsvariante. Auf den Helm ist beispielsweise dort, wo eine Blinkleuchte angebracht werden soll, eine Stecköse 4 aufgeklebt. Die Stecköse 4 besteht beispielsweise aus Kunststoff. Die Blinkleuchten 3 sind mit Steckleisten 5 versehen, die in die Stecköse 4 einsteckbar sind. Die Blinkleuchten 3 lassen sich bei dieser Bauweise bei Nichtgebrauch abnehmen. Damit läßt sich ein Diebstahl vermeiden. Diese Befestigungsart ist in gleicherweise auch für die kombinierte Rück- und Bremsleuchte 15,sowie die Erkennungsleuchten 16 und 17 einsetzbar.

Fig. 4 zeigt eine Variante, bei der auf die Bodenfläche 3c der Blinkleuchten 3 ein Klettverschlußstück 6a aufgeklebt ist. Das Klettverschlußgegenstück 6b ist auf den Schutzhelm 1 aufgeklebt. Auch in diesem Fall sind die Blinkleuchten 3 abnehmbar. Diese Bauweise gilt auch für die kombinierte Rück- und Bremsleuchte 15, sowie die vorderen und seitlichen Erkennungsleuchten 16,17.

Bei einer weiteren Montagevariante, die in den Fig. 6 und 7 dargestellt ist, sind die Blinkleuchten 3, eine kombinierte Rück- und Bremsleuchte 15, sowie gegebenenfalls seitlich und vordere Erkennungsleuchten 16,17 an einem Träger 7, beispielsweise einem Band, angeordnet. Das Band erstreckt sich im montierten Zustand von dem einen Helmseitenbereich 2b über die Helmrückseite 2a zum anderen Helmseitenbereich 2b. Das Band kann auf den Schutzhelm 1 aufgeklebt oder aufklebbar sein. Es ist auch möglich, auf den Schutzhelm 1 Klettbänder 7a zu kleben und an dem Träger Klettbandgegenstücke zu befestigen.

Die Unterteile 3a,15a,16a,17a der Leuchten 3, 15,16,17 sind zur Aufnahme von Batterien 8 eingerichtet. Diese Batterien 8 sind in Fig. 1 bei dem Ausführungsbeispiel der Blinkleuchte schematisch angedeutet. Die in Fig. 1 angedeuteten Leuchtmittel 9 können Glühlampen oder Leuchtdioden sein.

Bei der Verwendung eines gemeinsamen Trägers 7 ist es möglich, die Leuchten 3,15,16,17 über den Träger 7 elektrisch zu verbinden und an einer Stelle des Trägers 7 einen Batteriekasten 10 vorzusehen.

Es ist auch denkbar, über ein Kabel 11 und eine elektrische Kupplung 12 eine Kabelverbindung 13 zu der Fahrzeugbatterie oder einem anderen Stromerzeuger am nicht dargestellten Fahrzeug herzustellen.

Die Ansteuerung zum An- und Abschalten des Blinkens erfolgt zweckmäßig über einen Sender am Fahrzeug, den der Fahrer bedient, und Empfänger 14 an den Blinkleuchten. Bei einer Kabelverbindung ist es aber auch möglich, das Ein- und Ausschalten gemeinsam mit den entsprechenden Leuchten am Fahrzeug zu steuern.

Mit den Befestigungsarten nach den Fig. 2 bis 4 ist an der Schutzhelmrückseite 2a die in Fig. 1 angedeutete rote Schlußleuchte 15 anbringbar oder angebracht. Diese Schlußleuchte 15 ist vorzugsweise eine Kombinationsleuchte aus der Rückleuchte und einer Bremsleuchte. Die kombinierte Rück- und Bremsleuchte ist so aufgebaut, daß die Lichthelligkeit durch die Zuschaltung von weiterer Lichtleistung beim Bremsvorgang stark erhöht wird , wie das bei Fahrzeugen heute allgemein üblich ist.

Bei allen einsetzbaren Leuchten 3,15,16,17 sind die Bodenflächen 3c,15c,16c,17c der Unterteile 3a,15a,16a,17a der Wölbung des Schutzhelmes 1 angepaßt.

Die seitlichen Erkennungsleuchten 16 können an der Vorderseite weiß und an der Rückseite rotleuchtend eingefärbt sein. Die vordere Erkennungsleuchte 17 kann eine fahrzeugtypische Erkennung aufweisen, die beispielsweise auf die Transportart oder den Fahrzeughersteller hinweist. Wie viele dieser Leuchtenarten am Schutzhelm 1 zum Einsatz kommen, bleibt dem Träger oder den jeweiligen noch zu erwartenden Vorschriften überlassen.

## Patentansprüche

1. Leuchten zur nach außen sichtbaren Anzeige von Fahrsituationen im Straßenverkehr, an dem Verkehrsteilnehmer als Fahrer auf einem Fahrzeug frei sitzend teilnehmen und dabei einen Schutzhelm (1) tragen, wobei mittels am Fahrzeug frei sichtbar angebrachter Leuchten Funktions- und Signalanzeigen, wie das Beleuchten, das Bremsen, das Blinken zum Fahrtrichtungswechsel sowie gegebenenfalls die Positionserkennung, im Umfeld des Fahrzeuges erkennbar gemacht werden, dadurch gekennzeichnet, daß der Schutzhelm (1) Träger von Leuchten (3,15,16,17) ist, die mehrere der genannten Funktions- und Signalanzeigen des Fahrzeuges zusätzlich am Schutzhelm (1) und damit an deutlich erhöhter Stelle einzeln und/oder kombiniert zur Anzeige bringen, wobei die zusätzlichen Leuchten (3,15,16,17) speziell für die Anbringung an dem Schutzhelm (1) ausgebildet und an diesem anbringbar oder angebracht sind.

2. Leuchten nach Anspruch 1, dadurch gekennzeichnet, daß die Leuchten (3) am Schutzhelm (1) an beiden Seitenbereichen des Schutzhelmes (1) anbringbare Blinkleuchten (3) zur Anzeige eines Fahrtrichtungswechsels sind.

3. Leuchten nach Anspruch 1, dadurch gekennzeichnet, daß die Leuchten (15) am Schutzhelm (1) eine oder mehrere an der Schutzhelmrückseite anbringbare Rückleuchten (15) zur Anzeige zur Erkennung für hinterherfahrende Fahrzeuge sind.

4. Leuchten nach Anspruch 1 und 3, dadurch gekennzeichnet, daß die Leuchten (15) am Schutzhelm (1) kombinierte Rückleuchten-Bremsleuchten (15) zur Erkennung des Fahrens und Bremsens für hinterherfahrende Fahrzeuge sind, wobei der Bremsvorgang durch eine Verstärkung der Leuchtleistung des Lichtes der roten Rückleuchte erkennbar machbar ist.

5. Leuchten nach Anspruch 1 und/oder 2, dadurch gekennzeichnet, daß die Leuchten am Schutzhelm (1) seitliche Erkennungsleuchten (16) sind, gegebenenfalls kombiniert mit Blinkleuchten (3).

6. Leuchten nach Anspruch 1, dadurch gekennzeichnet, daß die Leuchten (17) am Schutzhelm (1) vordere Erkennungsleuchten (17) sind.

7. Leuchten nach einem oder mehreren der Ansprüche 1 bis 6, dadurch gekennzeichnet, daß die Bodenflächen (3c,15c,16c,17c) der auf den Schutzhelm (1) aufsetzbaren Unterteile (3a,15a,16a,17a) der Leuchten (3,15,16,17) an die Formgebung des Schutzhelmes (1) angepaßt sind.

8. Leuchten nach einem oder mehreren der Ansprüche 1 bis 7, dadurch gekennzeichnet, daß die Leuchten (3,15,16,17) mittels an den Bodenflächen (3c, 15c,16c,17c) vorgesehenen Klebstoffes (3d) an dem Schutzhelm (1) anbringbar oder angebracht sind.

9. Leuchten nach einem oder beiden der Ansprüche 1 und 8, dadurch gekennzeichnet, daß der Klebstoff (3d) im unmontierten Zustand der Leuchten (3,15,16,17) mittels einer Schutzfolie ( 3e) inaktiviert ist.

10. Leuchten nach einem oder mehreren der Ansprüche 1 bis 7, dadurch gekennzeichnet, daß die Leuchten (3,15,16,17) an einem Träger (7) befestigt sind, der sich von dem einen Helmseitenbereich (2b) über die Helmrückseite (2a) zum anderen Helmseitenbereich (2b) erstrecken kann, wobei der Träger (7) an den Schutzhelm (1) anklebbar, ansteckbar oder anheftbar ist.

11. Leuchten nach einem oder mehreren der Ansprüche 1 bis 7, dadurch gekennzeichnet, daß die Leuchten (3,15,16,17) an den Schutzhelm (1) ansteckbar sind.

12. Leuchten nach einem oder mehreren der Ansprüche 1 bis 7, dadurch gekennzeichnet, daß die Leuchten (3,15,16,17) an den Schutzhelm (1) anheftbar sind.

13. Leuchten nach einem oder mehreren der Ansprüche 1 bis 12, dadurch gekennzeichnet, daß die Leuchten (3,15,16,17) mit Batterien (8) versehen sind.

14. Leuchten nach einem oder mehreren der Ansprüche 1 bis 12, dadurch gekennzeichnet, daß die Leuchten (3,15,16,17) mittels einer Kabelverbindung (13) mit einer Batterie oder einem Stromerzeuger des Fahrzeuges verbindbar sind.

15. Leuchten nach Anspruch 14, dadurch gekennzeichnet, daß in der Kabelverbindung (13) zwischen dem Schutzhelm (1) und der Batterie oder dem Stromerzeuger des Fahrzeuges vorzugsweise am Schutzhelm (1) ein elektrisches Kupplungsstück (12) vorgesehen ist.

16. Leuchten nach einem oder mehreren der Ansprüche 1 bis 15, dadurch gekennzeichnet, daß die Leuchten (3,15,16,17) einzeln oder gemeinsam mit einem Empfänger (14) ausgerüstet sind, mit dem der Lichtvorgang ein- und ausschaltbar ist, und daß am Fahrzeug entsprechende Sender vorgesehen sind.

17. Leuchten nach einem oder mehreren der Ansprüche 1 bis 15, dadurch gekennzeichnet, daß die Leuchten (3,15,16,17) gemeinsam mit den entsprechenden Leuchten am Fahrzeug ein- und ausschaltbar sind.
